# EUROPEAN PATENT SPECIFICATION

(11) **EP 0 578 491 B1**
(45) Date of publication and mention of the grant of the patent: **08.03.2000**
(21) Application number: 93305340.7
(22) Date of filing: 07.07.1993
(51) Int. Cl.: B01D 29/11

(54) **Filter**
Filter
Filtre

(30) Priority: 07.07.1992 ZA 925043; 20.11.1992 ZA 928987
(43) Date of publication of application: 12.01.1994
(73) Proprietor: Zodiac Pool Care Europe, 31130 Balma (FR)
(72) Inventor: Atkins, David Seagrave, Broederstroom, Transvaal Province (ZA)
(74) Representative: Cabinet BARRE LAFORGUE & associés

(56) References cited:
- GB-A- 1 588 736
- US-A- 3 502 221
- US-A- 4 961 847

## Description

This invention relates to filters and more particularly to a filter for coarse filtering debris from an induced flow of water.

There are many applications in which circulated water could benefit from the removal of debris from the water prior to it reaching a pump inlet. This is especially the case where the water is to be passed from the pump through a sand or bag filter to remove small dirt particles from the water.

This situation occurs in swimming pool filter assemblies to a very large extent and it has been proposed to use an in-line filter in the flexible hose which is used with the pool cleaning equipment. Such a filter has a body with axial inlet and outlet openings with means for connecting the body into a flexible hose. The body consists of an end cap and a main part housing a filter basket with a lip seal and bayonet and socket type joint between these body components. The inlet opening extends from the cap and the outlet opening from the main part.

While these filters have proved effective they are difficult to clean in that the hose must be separated into two parts to enable the basket to be removed for cleaning usually enabling air to enter the system.

US-A-3,502,221 discloses a strainer for use in a fluid pressure line, and comprising a hollow body closed at one end with a removable end cap at the other end and housing a filter basket with an open end against the closed end of the body, the end cap having an inlet opening and an outlet opening each providing means for connection into a liquid flow line, the inlet communicating with the interior of the filter basket and the outlet providing communication between it and the interior of the body outside the basket.

According to the present invention, there is provided an induced water flow floating filter comprising a hollow body closed at one end with a removable end cap at the other end and housing a filter basket with an open end against the closed end of the body, the end cap having an inlet opening and an outlet opening each providing means for connection into a liquid flow line, the inlet communicating with the interior of the filter basket via an access passage which protrudes into the interior of the filter basket, the outlet providing communication between it and the interior of the body outside the basket, and a flottation chamber (22) being provided in the end cap to entrap air and prevent the filter from sinking and instead retain the filter adjacent to the surface.

A filter unit according to the present invention is more versatile and easier to use and clean than the prior art swimming pool filter referred to above. It may also to provide a filter which will reduce blockages in the filter caused by large leaves and similar debris.

The invention also provides for the end cap to be connected to the body by means of a bayonet or screw type joint including a peripheral lip seal or o-ring or compression seal between the end cap and body.

The access into the basket will preferably be through a curved tubular member in sealing engagement with the periphery of an aperture into the basket, at least the downstream surface of the curved part of the member having a large radius of curvature and an overload relief spring permitting movement of the basket relative to the tubular member can be included in the assembly.

Further features of this invention provide for the body to have a relief valve through the wall thereof opening into the basket, for a baffle ring to be included between the basket and body near the open end and for the tubular member in the end cap to fit into the wide end of a truncated conical inlet into the basket.

The relief valve will preferably comprise an annular diaphragm located between the wall of a hollow body and a tubular inlet opening into the body, the diaphragm secured to the inner wall of the body and having its inner edge in frictional engagement with the inlet, the body having an outlet remote from the diaphragm.

Still further features of this invention provide for a debris breaking medium to be included in the basket filter which medium is capable of being moved in the basket by the turbulent water flow through the basket.

These and other features of this invention will become apparent from the following description of one embodiment described below with reference to the accompanying drawings in which
- Fig 1: is a cross-sectional view through the filter and
- Fig 2: is a part sectional end view of the end cap.

As illustrated the filter (1) is particularly suitable for use with a swimming pool cleaner and consists of a body (2) closed at one end (3). The other open end of the body provides the socket of a bayonet and socket joint indicated at (4).

The spigot (5) of the bayonet joint includes a peripheral lip seal provided around the open end of the body and the spigot forms part of an end cap (6). The end cap (6) has tubular inlet and outlet openings (7) and (8) integral therewith and separated from each other by a wall (9) which forms part of a tubular member (10) connected to the inlet opening (7). There is thus a flow path through the inlet (7) into the tubular member (10) and out of the end cap (6). It is to be noted that the curved downstream wall of the tubular member (10) has a large radius of curvature. This has been found in use to materially assist in preventing entrained debris blocking this member.

The opening (11) around the tubular member (10) into the end cap (6) communicates with the outlet (8).

The closed end (3) of the body (4) supports the open end of a perforated filter basket (12). The opposite end of the basket (12) has truncated conical inlet (13) which surrounds the tubular member (10). The end of the member (10) is a close fit within the wide end of the conical inlet (13).

An overload relief spring may be retained between between the end cap (6) and the basket (12). This will be arranged to permit axial movement of the basket along the tubular member (10).

This arrangement ensures that when flow is induced through the filter it will pass through inlet (7), tubular member (10), through the walls of the basket and out through opening (11) and outlet (8). When flow through the basket becomes too restrained the basket will lift against the action of the overload spring and create an opening for fluid flow under the edge of the open bottom of the basket. However this refinement will not usually be necessary because the filter is easily cleaned and with normal attention will not become blocked.

A relief valve (14) is included in the closed end (3) of the body (2) so that if the flow induced through the filter inlet (7) is greater than that desired to operate the swimming pool cleaner with which it is used then a relief flow can pass through the valve (16). The valve (14) can conveniently be in the form of a body (15) having an inlet (16) in the form of a tube opening into the body (15) and an outlet (17) and an annular flexible diaphragm (18) in frictional resilient engagement around the inlet (16) and having its outer periphery secured to the wall of the body (15). The opening through the diaphragm (18) is such that there is a preloading applied to the diaphragm which ensures that it will only flex inwardly into the body (15) to allow flow between the diaphragm (18) and the inlet (16) when the pressure within the body (15) has been reduced to a predetermined level.

Any increase in reduction of pressure below the predetermined level will result in increasing the opening between the diaphragm (18) and the tubular inlet (16).

This will control the amount of relief flow through the valve (16).

It will be appreciated the relief valve need not be of this particular type but any suitable valve can be used.

To facilitate the release of the bayonet joint (5) so that the basket (12) can be moved for cleaning handles (19) and (20) are provided on the body (4) and end cap (6) respectively.

The basket (12) has near its open end a peripheral flange (21) which extends from the basket to adjacent the inner wall of the body. It has been found that this flange (21) acts as a baffle and sand entrained in the flow through the filter gravitates to the lower region and the baffle restrains the sand in the filter body. The conical inlet to the basket has also been found to assist in providing a flow resulting in the deposit of sand in the bottom of the body.

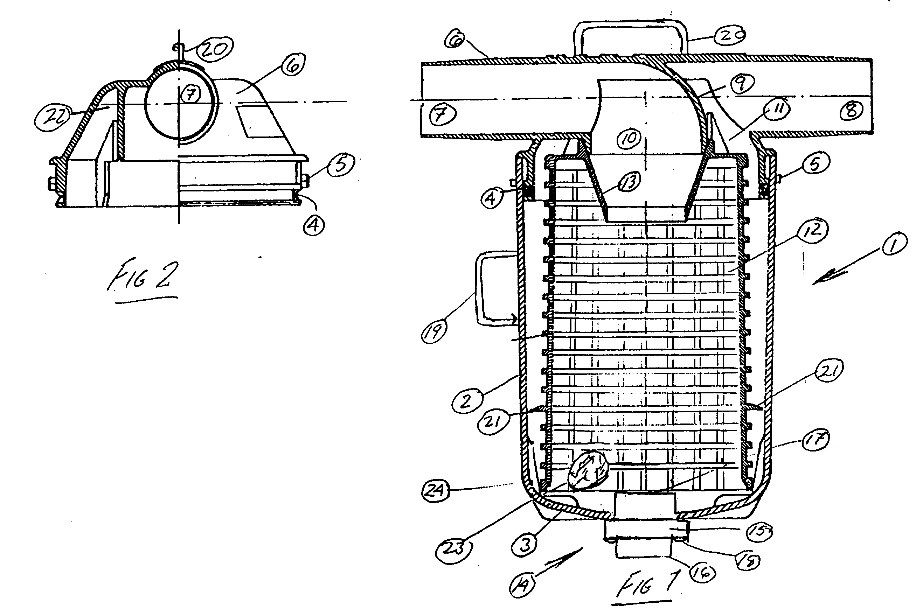

A flotation chamber (22) in the end cap (6) which can be seen most clearly in Fig 2 entraps air and this will prevent the filter from sinking down into the swimming pool and retain the hose adjacent the surface of the pool in the vicinity of the filter.

A debris breaking medium (23) is located in the filter basket. This medium can be of ball-like shape with a rough surface. The roughness may be provided by protrusions (24) on the surface. The mass of the medium is such that it will be caused to move by water flowing through the filter basket.

The introduction of a breaking medium into the basket has been found to render the filter far more effective in a situation where large numbers of leaves are sucked towards the filter pump. The flow induced through the filter results in turbulence within the basket. This causes the medium to move about the basket and crush leaves between it and the wall of the basket.

It has been found that by suitable choice of the density of the crushing medium the filter can be made to trap up to four times more debris than the filter without this medium before cleaning is required. This is because leaves are prevented from lying against the wall of the basket and thereby blocking large areas of filter surface. They are broken up into small pieces allowing adequate flow through the filter for a far longer period than is otherwise possible without cleaning.

It will be understood that the crushing medium can be widely varied without departing from the scope of this invention. It may be a single ball or a plurality of balls. The main criterion is that the medium be such that it will move sufficiently under the turbulence generated in the basket to cause breaking of the debris between the medium and wall of the basket.

The filter (1) as stated above is particularly suitable for inclusion in the induced flow line of a domestic swimming pool cleaner. The filter can be included in the flexible hose where it will be understood that the hose need not be broken when the filter basket (12) has to be removed for cleaning. The body (2) is disconnected from the end cap (6) and the filter basket (12) and body (2) cleaned and replaced without interference with the relief valve (14) or the connections between the flexible hose and end cap (6).

Alternatively the filter may be included in the weir assembly of the swimming pool between the weir inlet and the connection to the pump. A second water path to the pump can easily be provided from the bottom of the weir to provide for surface flow from the pool to the pump and effect the desired skimming of the pool surface.

Wherever the filter is located it will be understood that the body and basket are located below the direct flow line to the pump. This has been found to enable the filter to operate effectively to remove debris from the water. Also smaller particles tend to sink as a sediment into the bottom of the body.

The filter is effective, easily cleaned and maintained and the inclusion of the relief valve has been found to avoid the necessity for a separate device for this purpose in the flow line from the pool cleaner to the pump. This is particularly so when the filter is located in the pool weir.

Also it will be appreciated that the filter can be supported in a floating bucket in a manner which will enable the relief valve to operate as a moving and floating weir to skim the surface of the water in which the filter is located.

## Claims

1. An induced water flow floating filter (1) comprising a hollow body (2) closed at one end (3), with a removable end cap (6) at the other end and housing a filter basket (12) with an open end against the closed end of the body (2), the end cap (6) having an inlet opening (7) and an outlet opening (8) each providing means for connection into a liquid flow line, the inlet (7) communicating with the interior of the filter basket (12) via an access passage (13) which protrudes into the interior of the filter basket (12), the outlet (8) providing communication between it and the interior of the body (2) outside the basket (12), and a flotation chamber (22) being provided in the end cap (6) to entrap air and prevent the filter from sinking and instead retain said filter adjacent to the surface.

2. A filter as claimed in claim 1, wherein a lip seal (4) is provided between the end cap (6) and the body (2).

3. A filter as claimed in claim 1 or 2, wherein the end cap (6) and body (2) are connected by means of a bayonet and socket joint (5).

4. A filter as claimed in any one of the preceding claims , wherein the open end of the basket (12) is resiliently biased against the closed end of the body (2).

5. A filter as claimed in any one of the preceding claims , wherein a relief valve (14) is provided opening into the body.

6. A filter as claimed in claim 5 ,
wherein the relief valve (14) opens into the body (2) within the open end of the basket (12).

7. A filter as claimed in claim 6,
wherein the relief valve (14), comprises a body (15) having an inlet (16) in the form of a tube opening into the body (2) and an outlet and an annular flexible diaphragm (18) in flexible resilient engagement around the inlet (16) with its outer periphery secured to the wall of the body (15).

8. A filter as claimed in any one of the preceding claims , wherein the filter basket (12) has an external flange (21) near its open end to form a baffle between the basket (12) and the body (2).

9. A filter as claimed in any one of the preceding claims , wherein a debris breaking medium (23) is located within the basket.

## Patentansprüche

1. Induzierter Wasserstromschwimmfilter (1), umfassend einen Hohlkörper (2), der an einem Ende (3) geschlossen ist und eine entfernbare Verschlußkappe (6) am anderen Ende aufweist, und der einen Filterkorb (12) aufnimmt, dessen offenes Ende am geschlossenen Ende des Körpers (2) liegt, wobei die Verschlußkappe (6) eine Einlaßöffnung (7) und eine Auslaßöffnung (8) aufweist, die jeweils ein Mittel für den Anschluß an eine Flüssigkeitsdurchflußleitung bereitstellen, wobei der Einlaß (7) mit dem Inneren des Filterkorbs (12) über einen Zugangskanal (13) Verbindung hat, der in das Innere des Filterkorbs (12) vorsteht, wobei der Auslaß (8) die Kommunikation zwischen diesem und dem Inneren des Körpers (2) außerhalb des Korbes (12) bereitstellt, und wobei eine Flotationskammer (22) in der Verschlußkappe (6) vorgesehen ist, um Luft einzuschließen und zu verhindern, daß der Filter absinkt, sondern an der Oberfläche bleibt.

2. Filter nach Anspruch 1, bei dem eine Lippendichtung (4) zwischen der Verschlußkappe (6) und dem Körper (2) vorgesehen ist.

3. Filter nach Anspruch 1 oder 2, bei dem die Verschlußkappe (6) und der Körper (2) durch einen Bajonettverschluß (5) verbunden sind.

4. Filter nach einem der vorherigen Ansprüche, bei dem das offene Ende des Korbes (12) elastisch gegen das geschlossene Ende des Körpers (2) vorgespannt ist.

5. Filter nach einem der vorherigen Ansprüche, bei dem ein Entlastungsventil (14) vorgesehen ist, das in den Körper öffnet.

6. Filter nach Anspruch 5, bei dem das Entlastungsventil (14) im offenen Ende des Korbes (12) in den Körper (2) öffnet.

7. Filter nach Anspruch 6, bei dem das Entlastungsventil (14) einen Körper (15) mit einem Einlaß (16) in der Form einer Rohrleitung, die in den Körper (2) öffnet, und einem Auslaß und einer ringförmigen flexiblen Membran (18) umfaßt, die sich in flexiblem und elastischem Eingriff um den Einlaß (16) befindet, wobei ihr Außenumfang an der Wand des Körpers (15) befestigt ist.

8. Filter nach einem der vorherigen Ansprüche, bei dem der Filterkorb (12) einen externen Flansch (21) in der Nähe seines offenen Endes hat, um eine Ablenkfläche zwischen dem Korb (12) und dem Körper (2) zu bilden.

9. Filter nach einem der vorherigen Ansprüche, bei dem sich ein schmutzbrechendes Medium (23) in dem Körper befindet.

## Revendications

1. Un filtre flottant à circulation d'eau induite (1) englobant un corps creux (2) fermé à une extrémité (3), avec un bouchon d'extrémité (6) amovible à l'autre extrémité et renfermant un panier de filtrage (12) avec une extrémité ouverte contre l'extrémité fermée du corps (2), le bouchon d'extrémité (6) ayant une ouverture d'admission (7) et une ouverture de sortie (8) dont chacune constitue un moyen de raccordement dans un circuit de circulation de liquide, l'admission (7) communiquant avec l'intérieur du panier de filtrage (12) par l'intermédiaire d'un passage d'accès (13) qui fait saillie dans l'intérieur du panier de filtrage (12), la sortie (8) offrant la communication entre lui et l'intérieur du corps (2) à l'extérieur du panier (12), et une chambre de flottation (22) étant prévue dans le bouchon d'extrémité (6) pour piéger de l'air et pour empêcher le filtre de couler et, plutôt, pour retenir ledit filtre adjacent à la surface.

2. Un filtre selon la revendication 1, dans lequel un joint à lèvre (4) est prévu entre le bouchon d'extrémité (6) et le corps (2).

3. Un filtre selon la revendication 1 ou 2, dans lequel le bouchon d'extrémité (6) et le corps (2) sont raccordés au moyen d'un joint à emboîtement à baïonnette (5).

4. Un filtre selon l'une quelconque des revendications précédentes, dans lequel l'extrémité ouverte du panier (12) est préchargée élastiquement contre l'extrémité fermée du corps (2).

5. Un filtre selon l'une quelconque des revendications précédentes, dans lequel est prévue une soupape de sûreté (14) qui s'ouvre dans le corps.

6. Un filtre selon la revendication 5, dans lequel la soupape de sûreté (14) s'ouvre dans le corps (2) à l'intérieur de l'extrémité ouverte du panier (12).

7. Un filtre selon la revendication 6, dans lequel la soupape de sûreté (14) englobe un corps (15) ayant une admission (16) sous la forme d'un tube qui s'ouvre dans le corps (2) et une sortie et un diaphragme souple annulaire (18) en prise élastique souple autour de l'admission (16), sa périphérie extérieure étant fixée à la paroi du corps (15).

8. Un filtre selon l'une quelconque des revendications précédentes, dans lequel le panier de filtrage (12) a une bride extérieure (21) proche de son extrémité ouverte pour former une chicane entre le panier (12) et le corps (2).

9. Un filtre selon l'une quelconque des revendications précédentes, dans lequel un milieu de désagrégation de débris (23) est installé à l'intérieur du panier.
